# EUROPEAN PATENT APPLICATION

(11) **EP 4 797 041 A1**
(43) Date of publication of application: **26.08.2026**
(21) Application number: 26158764.6
(22) Date of filing: 16.02.2026
(51) Int. Cl.: G06F 1/16, G06F 3/14, H04M 1/02, H04M 1/72

(54) **MOBILE TERMINAL AND INTERACTION METHOD**

(30) Priority: 20.02.2025 CN 202510191716
(71) Applicant: Nothing Technology Limited, London WC1N 2BF (GB)
(72) Inventor: LIN, Youde, Shenzhen, 518035 (CN)
(74) Representative: EIP

(57) **Abstract**

The disclosure discloses a mobile terminal and an interaction method. The mobile terminal includes a first display component, a second display component, a first control chip, and a second control chip. The second control chip is connected to the first control chip and the second display component. The second control chip is configured to receive, in a first operational state, a first control instruction from the first control chip and control, according to the first control instruction, the second display component to display first content. The second control chip is further configured to generate, in a second operational state, a second control instruction and send the second control instruction to the second display component to control the second display component to display second content. In embodiments of the disclosure, by newly adding the second display component and the second control chip for controlling the second display component, users can view information through the newly added second display component when it is inconvenient to view information through the first display component, which enhances the adaptability of the mobile terminal in different environments and improves the convenience for users.

## Description

### TECHNICAL FIELD

This disclosure generally relates to the field of mobile phone technology. More specifically, this disclosure relates to a mobile terminal and an interaction method.

### BACKGROUND

With the development of mobile terminals, related mobile phone products are no longer limited to previous main functions (e.g., communication, internet access, etc.). On the basis of the main functions, more attention is paid to the convenience of operation for users and adaptability in different environments. For example, when a user is in a crowded and noisy environment, if the user needs to view information such as weather, photos, etc., the user needs to first unlock a display screen (referred to as a first display component) of a mobile phone and then tap a relevant application on the first display component to view the information. However, the operation is inconvenient for the user in the crowded and noisy environment. Therefore, there is an urgent need to provide a mobile terminal and an interaction method to improve the adaptability of the mobile terminal in different environments and the convenience for users.

### SUMMARY

To solve at least one or more of the technical problems mentioned above, the disclosure provides a mobile terminal and an interaction method in multiple aspects.

In a first aspect, the disclosure provides a mobile terminal. The mobile terminal is a first mobile terminal. The mobile terminal includes a first display component, a second display component, a first control chip, and a second control chip. The second control chip is connected to the first control chip and the second display component. The second control chip is configured to receive, in a first operational state, a first control instruction from the first control chip and control, according to the first control instruction, the second display component to display first content. The second control chip is further configured to generate, in a second operational state, a second control instruction and send the second control instruction to the second display component to control the second display component to display second content.

In some embodiments, the first mobile terminal further includes a memory connected to the second control chip. If display content to be displayed on the second display component is the second content, the display content is provided by content stored in the memory. If the display content is the first content, the display content is provided by content transmitted by the first control chip. or the display content is provided jointly by the content transmitted by the first control chip and the content stored in the memory.

In some embodiments, the first mobile terminal further includes a control region. The control region is connected to the second control chip. The control region is configured to receive input information externally and send the input information to the second control chip to switch content displayed on the second display component.

In some embodiments, the second control chip is further configured to control, when the first control chip is in a standby state, the second display component to display the first content.

In some embodiments, the first mobile terminal further includes the control region and a third control chip. The control region is configured to receive input information externally and send the input information to the third control chip. The third control chip is connected to the first control chip and the control region. The third control chip is configured to send the received input information to the first control chip. The first control chip determines operational state of the second display component based on the input information.

In some embodiments, the first mobile terminal further includes a fourth control chip and a prompt component. The control region is further configured to activate the prompt component. The fourth control chip is configured to control the prompt component to provide a prompt.

In some embodiments, the second display component is an array of light-emitting units. When performing an operation of displaying specified content on the first display component, array division is performed on the specified content. Each light-emitting unit is mapped to at least one divided region of the specified content, and a display parameter of the light-emitting unit mapped to each divided region is determined to obtain a dot-matrix form of the specified content. The second display component is controlled to display the specified content based on the dot-matrix form of specified content.

In some embodiments, the light-emitting unit defines a gap(s), and a photovoltaic component is arranged in the gap(s). The photovoltaic component is configured to supply power to at least one of the second control chip or the second display component.

In some embodiments, the first mobile terminal further includes a camera module. The first control chip is further configured to control the camera module to capture a first preview image. The first control chip is further configured to process the first preview image captured into a second preview image and send the second preview image to the second control chip. The second preview image is a dot-matrix form of the first preview image. The second control chip is further configured to control the second display component to display the second preview image.

In some embodiments, the first mobile terminal further includes the camera module. When image capture is required, the second control chip is further configured to generate an invoke instruction for invoking the camera module and control the second display component to display an image captured, based on the invoke instruction, by the camera module.

In some embodiments, the first mobile terminal is connected to a second mobile terminal. The second mobile terminal is connected to the first control chip, and the first control chip is configured to obtain operational information of the second mobile terminal and send the operational information to the second control chip to control the second display component to display at least part of the operational information. The operational information includes at least one of an operational state of the second mobile terminal, operational content displayed on the second mobile terminal, or an operational interface of the second mobile terminal. Alternatively, the second mobile terminal is connected to the second control chip, and the second control chip is further configured to obtain the operational information of the second mobile terminal and control the second display component to display at least part of the operational information.

In some embodiments, when the second mobile terminal is connected to the second control chip, the second control chip is further configured to control the operational state of the second mobile terminal.

In some embodiments, the first mobile terminal further includes a widget. The first control chip is further configured to process initial content displayed on the widget into target content and send the target content to the second control chip. The target content is a dot-matrix form of the initial content. The second control chip is further configured to control the second display component to display the target content.

In a second aspect, the disclosure provides an interaction method. The interaction method is applied to the mobile terminal of the above first aspect or any one of the embodiments of the first aspect, and the method includes the following. An operational state of a second control chip is determined. Upon determining that the second control chip is in a first operational state, a first control instruction sent by a first control chip is received, and a second display component is controlled, according to the first control instruction, to display first content. Upon determining that the second control chip is in a second operational state, a second control instruction is sent to the second display component to control the second display component to display second content.

According to the mobile terminal and the interaction method provided above, for the first mobile terminal in the embodiments of the disclosure, in addition to the existing first display component and the first control chip, the second display component and the second control chip for controlling the second display component are newly added. In different operational states, the second control chip controls the second display component to display different content (i.e., the first content and the second content). This configuration can facilitate users' viewing of information through the newly added second display component when it is inconvenient or undesirable for the user to view information through the first display component. In this way, the adaptability of the first mobile terminal in different environments can be enhanced, the convenience for users can be improved, and the frequency of users' usage of the first display component can be reduced.

### BRIEF DESCRIPTION OF THE DRAWINGS

With reference to the accompanying drawings and the following detailed description, the above and other objectives, features, and advantages of the exemplary implementations of the disclosure will become easy to understand. In the accompanying drawings, several implementations of the disclosure are illustrated in an exemplary rather than limited manner, and the same or corresponding reference numerals denote the same or corresponding parts.
FIG. 1 is a schematic diagram of a first mobile terminal in some embodiments of the disclosure.
FIG. 2 is a schematic diagram of a front surface and a back surface of a first mobile terminal in some embodiments of the disclosure.
FIG. 3 is a specific exemplary diagram of a second display component in some embodiments of the disclosure.
FIG. 4 is a specific exemplary diagram of a snake game interface in some embodiments of the disclosure.
FIG. 5 is a schematic diagram of a first mobile terminal including a memory in some embodiments of the disclosure.
FIG. 6 is a schematic diagram of a first mobile terminal including a control region in some embodiments of the disclosure.
FIG. 7 is a back schematic diagram of a first mobile terminal including a control region in some embodiments of the disclosure.
FIG. 8 is a schematic diagram of a control region integrated with a capacitive sensor component and a pressure sensor component in some embodiments of the disclosure.
FIG. 9 is a schematic diagram of deployment of a capacitive sensor component and a pressure sensor component in some embodiments of the disclosure.
FIG. 10 is a schematic diagram of a first mobile terminal including a third control chip and a control region in some embodiments of the disclosure.
FIG. 11 is a schematic diagram of a first mobile terminal including a prompt component and a fourth control chip in some embodiments of the disclosure.
FIG. 12 is a back schematic diagram of a first mobile terminal including a vibration motor in some embodiments of the disclosure.
FIG. 13 is a back schematic diagram of the first mobile terminal including a light strip in some embodiments of the disclosure.
FIG. 14 is a schematic diagram of a widget in some embodiments of the disclosure.
FIG. 15A is a specific exemplary diagram of a first preview image and a second preview image in some embodiments of the disclosure.
FIG. 15B is another specific exemplary diagram of a first preview image and a second preview image in some embodiments of the disclosure.
FIG. 16 is a flowchart of an interaction method in some embodiments of the disclosure.

Explanation of reference numerals:
first mobile terminal 100; first display component 110; second display component 120;
first control chip 130; second control chip 140; memory 150;
control region 160; third control chip 170; fourth control chip 180;
prompt component 190; camera module 1100.

### DETAILED DESCRIPTION

The following will clearly and completely describe the technical solution of embodiments of the disclosure with reference to the accompanying drawings in embodiments of the disclosure. Obviously, the described embodiments are part of the embodiments of the present disclosure, not all of the embodiments. Based on the embodiments in the present disclosure, any other embodiments obtained by those skilled in the art without making creative efforts shall belong to the protection scope of the present disclosure.

It should be understood that terms "include" and "comprise" used in the specification and claims of the present disclosure indicate the presence of the described features, integers, steps, operations, elements and/or components, but do not exclude the presence or addition of one or more other features, integers, steps, operations, elements, components and/or sets thereof.

It should also be understood that the terms used in the specification of the present disclosure are only for the purpose of describing specific embodiments and are not intended to limit the present disclosure. As used in the specification and claims of the present disclosure, singular forms "a", "an" and "the" are intended to include plural forms unless the context clearly indicates otherwise. It should be further understood that the term "and/or" used in the specification and claims of the present disclosure refers to any combination and all possible combinations of one or more of the associated listed items, and includes these combinations.

As used in the specification and claims, the term "if" may be interpreted in the context as "when", "once", "in response to determining" or "in response to detecting". Similarly, the phrase "if it is determined" or "if [the described condition or event] is detected" may be interpreted according to the context as meaning "once it is determined", "in response to determining", "once [the described condition or event] is detected", or "in response to detecting [the described condition or event]".

The specific implementations of the present disclosure will be described in detail below with reference to the accompanying drawings.

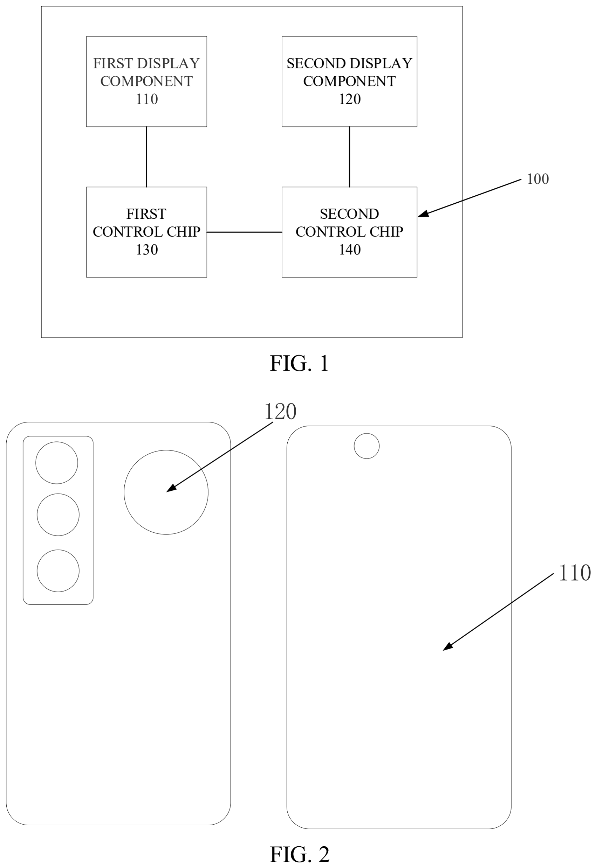

With reference to FIG. 1, FIG. 1 is a schematic diagram of a first mobile terminal 100 in embodiments of the disclosure. As illustrated in FIG. 1, in embodiments of the disclosure, the first mobile terminal 100 includes a first display component 110, a second display component 120, a first control chip 130, and a second control chip 140. The second control chip 140 is connected to the first control chip 130 and the second display component 120. The second control chip 140 is configured to receive, in a first operational state, a first control instruction from the first control chip 130 and control, according to the first control instruction, the second display component 120 to display first content. The second control chip 140 is further configured to generate, in a second operational state, a second control instruction and send the second control instruction to the second display component 120 to control the second display component 120 to display second content.

Exemplarily, in embodiments of the disclosure, as illustrated in FIG. 1, the second control chip 140 is connected to the first control chip 130 and the second display component 120, and the first control chip 130 is connected to the first display component 110. It should be noted that the first control chip 130 may also be connected to the second display component 120.

Exemplarily, in embodiments of the disclosure, the first mobile terminal 100 further includes a main body (not illustrated in FIG. 1). The first display component 110 may be on a first surface (front surface) of the main body of the first mobile terminal 100 and fully or partially cover the first surface. The display technology adopted by the first display component may be liquid crystal display (LCD), organic light-emitting diode (OLED), active-matrix organic light-emitting diode (AMOLED), etc., which is not limited in embodiments of the disclosure.

In embodiments of the disclosure, the first mobile terminal 100 further includes a transparent cover plate that covers a second surface of the main body of the first mobile terminal 100. On this basis, the second display component 120 is under the transparent cover plate.

In embodiments of the disclosure, a display area of the second display component 120 (which may be referred to as a secondary screen of the first mobile terminal 100) is smaller than a display area of the first display component 110. The second display component 120 may be disposed at any position on the second surface (e.g., back surface) of the main body of the first mobile terminal 100. Embodiments of the disclosure herein are described with an example where the second surface is the back surface of the main body of the first mobile terminal 100. The display technology adopted by the second display component 120 may be LCD, OLED, or AMOLED. To achieve differentiation from the first display component 110 and present a unique display effect, the display technology adopted by the second display component may also be mini LED. The display technology adopted by the second display component 120 is not specifically limited in the embodiments of the disclosure.

FIG. 2 is a specific schematic diagram of a front surface and a back surface of the first mobile terminal 100. As illustrated in FIG. 2, the second display component 120 is disposed in an upper-right region of the back surface (i.e., the above-mentioned second surface) of the first mobile terminal 100. The first display component 110 is disposed on the front surface (i.e., the above-mentioned first surface) of the first mobile terminal 100 and partially covers the front surface of the first mobile terminal 100.

Embodiments of the disclosure are described with an example where the display technology adopted by the second display component 120 is mini LED. In this case, the second display component 120 may be an array of light-emitting units, such as a 100*100 square array, or a circular array including 5000 light-emitting units. The number of light-emitting units and the shape of the array are not specifically limited in the embodiments of the disclosure.

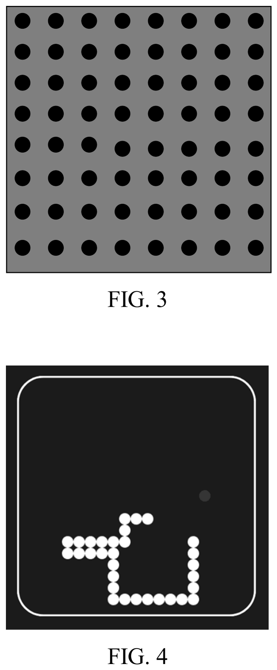

FIG. 3 is a specific exemplary diagram of the second display component 120 in some embodiments of the disclosure. As illustrated in FIG. 3, the second display component 120 in FIG. 3 is composed of light-emitting units arranged in an 8*8 square array, where the black circles represents the light-emitting units. It should be noted that for the convenience of illustration, the 8*8 square array in FIG. 3 is only an example, which is not used for limiting the disclosure.

Exemplarily, in embodiments of the disclosure, computing performance of the first control chip 130 is greater than computing performance of the second control chip 140. Specifically, the first control chip 130 may be a main control chip of the first mobile terminal 100, such as a system on chip (SOC). The second control chip 140 may be a chip for controlling the second display component 120, such as a microcontroller unit (MCU). Both the first control chip 130 and the second control chip 140 are integrated within the main body of the first mobile terminal 100.

Exemplarily, in embodiments of the disclosure, the second control chip 140 is configured with two operational states, namely a first operational state and a second operational state. When the second control chip 140 is in the first operational state, the first control chip 130 and the second control chip 140 cooperate to control the second display component 120 to display, that is, the second control chip 140 receives a first control instruction sent by the first control chip 130 and controls, according to the first control instruction, the second display component 120 to display a first content. When the second control chip 140 is in the second operational state, the second control chip 140 independently controls the second display component 120 to display, that is, the second control chip 140 generates a second control instruction and sends the second control instruction to the second display component 120 to control the second display component 120 to display a second content.

In embodiments of the disclosure, the operational state of the second control chip 140 may be determined by the display content to be displayed on the second display component 120. If the display content is the first content, the second control chip 140 operates in the first operational state. If the display content is the second content, the second control chip 140 operates in the second operational state.

The first content may be, for example, a game (e.g., snake game) interface, an image obtained by driving a camera module for image capture, etc. The second content may be, for example, time, power, weather, etc. The first content and the second content are not specifically limited in the embodiments of the disclosure, which may be determined according to actual conditions.

FIG. 4 illustrates a specific example of a snake game interface in some embodiments of the disclosure. As illustrated in FIG. 4, pixels of the game interface correspond one-to-one with light-emitting units of the second display component 120. A moving snake (i.e., the line composed of white dots in FIG. 4) moves forward continuously, avoiding its own body and obstacles (not illustrated in FIG. 4) to eat food (i.e., the gray dot in FIG. 4) on the interface. Each time the snake eats a piece of food, the snake body increases by one segment (e.g., one white dot).

In addition to the existing first display component 110 and the existing first control chip 130, a second display component 120 and a second control chip 140 for controlling the second display component 120 are newly added in the first mobile terminal 100 of the embodiments of the disclosure. When the second control chip 140 is in different operational states, the second control chip 140 controls the second display component 120 to display different display content (i.e., the first content and the second content). This configuration can facilitate users' viewing of information through the newly added second display component 120 when it is inconvenient or undesirable for the user to view information through the first display component 110. In this way, the adaptability of the first mobile terminal 100 in different environments can be enhanced, the convenience for users can be improved, and the frequency of users' usage of the first display component can be reduced.

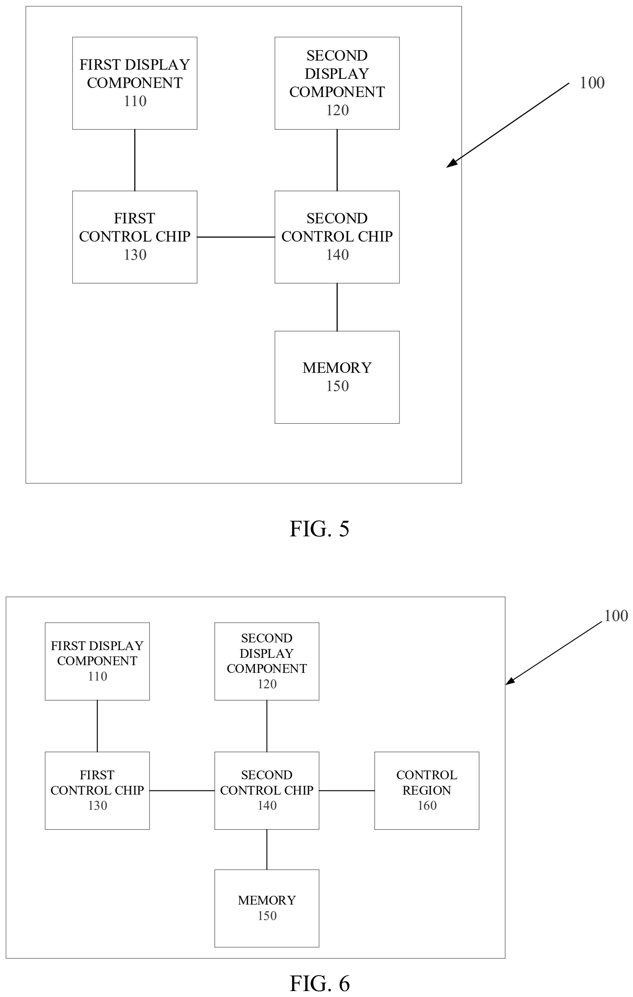

As an optional embodiment of the disclosure, as illustrated in FIG. 5, the first mobile terminal 100 further includes a memory 150 connected to the second control chip 140. If display content to be displayed on the second display component 120 is the second content, the display content is provided by content stored in the memory 150. If the display content to be displayed is the first content, the display content is provided by content transmitted by the first control chip 130, or the display content is provided jointly by the content transmitted by the first control chip 130 and the content stored in the memory 150.

Exemplarily, in embodiments of the disclosure, the memory 150 is configured to store the content sent by the first control chip 130. The content stored in the memory 150 may be content that the first control chip 130 feeds back to the second control chip 140 based on a received data acquisition instruction and then is stored by the second control chip 140, or may be content that the first control chip 130 sends to the second control chip 140 periodically (e.g., every 2 minutes) and then is stored by the second control chip 140. Embodiments of the disclosure are not specifically limited in this regard.

In embodiments of the disclosure, there are multiple methods for determining the display content to be displayed on the second display component 120. For example, the display content to be displayed on the second display component 120 is determined in response to an operation performed on the first display component 110. For another example, the display content to be displayed on the second display component 120 is determined in response to an operation performed on the control region 160 (which is specifically described in the following embodiments). Embodiments of the disclosure are not specifically limited in this regard.

In embodiments of the disclosure, if the display content is the second content, the display content may be provided by the memory 150. If the display content is the first content, the display content is provided by content transmitted by the first control chip 130, or the display content is provided jointly by the content transmitted by the first control chip 130 and the content stored in the memory 150.

As a specific example, if the display content is weather, stored weather information may be directly obtained from the memory 150 for display. If the display content is a captured real-time image, the first control chip 130 controls a camera module of the first mobile terminal 100 to perform image capture and transmits the captured real-time image to the second control chip 140. The second control chip 140 controls the second display component 120 to display the captured real-time image. If the display content is weather changes in the next few days starting from today, the first control chip 130 transmits the weather information about the next few days to the second control chip 140, and the second control chip obtains today's weather information from the memory 150 for joint display.

As an optional embodiment of the disclosure, as illustrated in FIG. 6, the first mobile terminal 100 further includes a control region 160. If computing performance of the second control chip 140 is high, the second control chip 140 may also be configured to control the aforementioned control region 160, that is, the control region 160 is connected to the second control chip 140, and is configured to receive input information externally and send the input information to the second control chip 140 to switch content displayed on the second display component 120.

Exemplarily, in embodiments of the disclosure, the control region 160 is configured to switch the content displayed on the second display component 120. The control region 160 may be a touch screen, a physical key, a pressure-sensitive key, etc. The control region 160 may be disposed at any position on the first surface of the main body of the first mobile terminal 100. For more convenient control of the second display component 120, the control region 160 may also be disposed at any position on the second surface of the main body of the first mobile terminal 100. The control region 160 and the disposal position of the control region 160 are not specifically limited in embodiments of the disclosure. Embodiments of the disclosure are described with an example where the control region 160 disposed on the second surface of the main body of the first mobile terminal 100.

As a specific implementation of embodiments of the disclosure, the main body of the first mobile terminal 100 further includes a frame. When the control region 160 is on the second surface of the main body of the first mobile terminal 100, the control region 160 may be disposed at a position in the middle close to the frame. In this case, the control region 160 may be disposed at a position in the middle close to the left frame or a position in the middle close to the right frame of the second surface. The position of the control region 160 on the second surface is not specifically limited in embodiments of the disclosure.

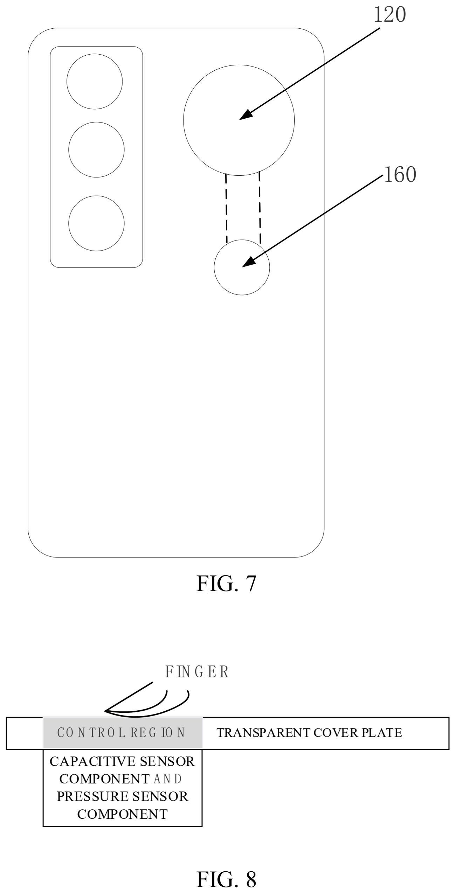

FIG. 7 is a schematic diagram of the control region 160 disposed on the second surface of the main body of the first mobile terminal 100. As illustrated in FIG. 7, the control region 160 is disposed at the position in the middle close to the right frame of the second surface.

When the control region 160 is on the second surface of the main body of the first mobile terminal 100, if the control region 160 is a touch screen, the control region 160 may be under the aforementioned transparent cover plate. If the control region 160 is a physical key, a hole may be defined in a region of the transparent cover plate corresponding to the control region 160 to facilitate user pressing. If the control region 160 is a pressure-sensitive key, the control region 160 may be under the aforementioned transparent cover plate, or a hole may be defined in the region of the transparent cover plate corresponding to the control region 160 to facilitate user pressing.

As a specific example, when the control region 160 is the pressure-sensitive key, the control region 160 may integrate at least one sensor component. The sensor component here may include a capacitive sensor component, a pressure sensor component, etc. Embodiments of the disclosure are not specifically limited in this regard. For example, the control region 160 integrates one pressure sensor component. For another example, the control region 160 integrates two pressure sensor components. For another example, the control region 160 integrates one capacitive sensor component and one pressure sensor component. For another example, the control region 160 integrates one capacitive sensor component and at least two pressure sensor components.

When the control region 160 integrates the pressure sensor component, in a specific implementation, a user may perform operations such as single-tap, double-tap, sliding, etc., in the control region 160, and different operations correspond to different functions. For example, the first single-tap is to wake up, the second single-tap is to switch, a double-tap is to invoke a special function. The special function may be, for example, invoking an AI assistant, switching apps, controlling music playback (e.g., pausing playback, starting playback, switching to the next song), etc.

In addition, to prevent accidental touches, the control region 160 further integrates the capacitive sensor component. When user's finger touches the control region 160, the capacitive sensor component can detect a capacitive signal. When both the capacitive signal and a pressure signal are received simultaneously, it is considered a valid trigger signal, so as to avoid accidental touches caused by accidentally pressing the control region in the pocket.

Based on the above description, in embodiments of the disclosure, there are many types of input information received by the control region 160, such as single-tap information, double-tap information, tap information with different pressures, etc. Each type of input information may correspond to one display content on the second display component 120, and the content displayed on the second display component 120 is switched through different input information. For example, the single-tap information corresponds to displaying an image on the second display component 120, and the double-tap information corresponds to displaying a date on the second display component 120.

Alternatively, the input information can be only one type, such as the single-tap. In this case, the display content on the second display component 120 may be sorted, and the content is displayed according to the sorted result each time the control region 160 is tapped. For example, the sorted result of the display content on the second display component 120 is: image, power of the mobile terminal, date, and clock. When the control region 160 is tapped in sequence, the control region 160 displays the image, then the power of the mobile terminal, then the date, then the clock, then the image again, then the power of the mobile terminal... cycling through the content in sequence.

As a specific embodiment of the disclosure, as illustrated in FIG. 8, the control region 160 integrates the capacitive sensor component and the pressure sensor component. The capacitive sensor component and the pressure sensor component are under the transparent cover plate. When user's finger presses the control region 160, the capacitive sensor component generates a capacitive signal, and at the same time, the pressure sensor component generates a pressure signal upon the finger press. When both signals are triggered simultaneously, a press signal is reported to the second control chip 140. In embodiments of the disclosure, two sensor components are provided to the control region 160 to prevent accidental triggering.

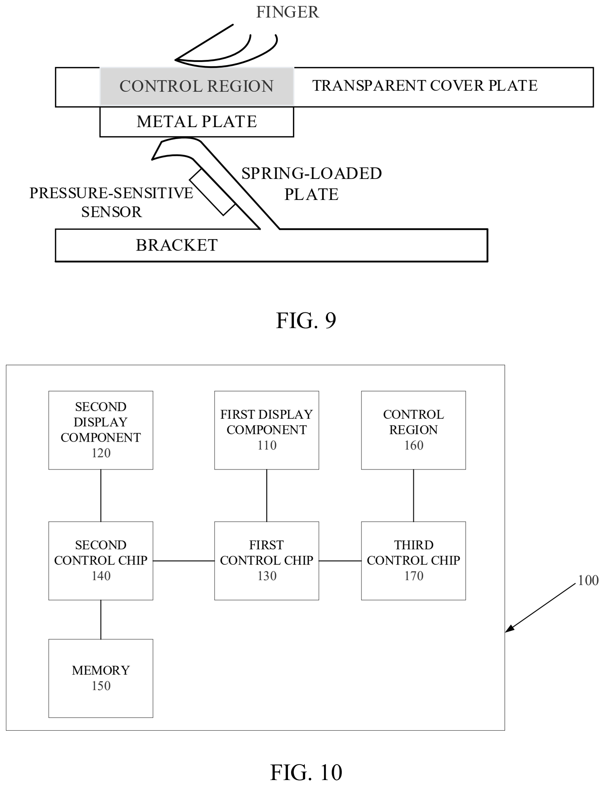

Specifically, as illustrated in FIG. 9, a pressure-sensitive sensor is attached to a spring-loaded plate, forming the pressure sensor component. The pressure sensor component is supported by a bracket onto a metal plate (the capacitive sensor component), and the metal plate is under the transparent cover plate. When user's finger presses the control region 160, a capacitive signal is generated through the metal plate, and the spring-loaded plate deforms to transmit pressure to the pressure-sensitive sensor, such that the pressure-sensitive outputs the pressure signal.

As another specific embodiment of the disclosure, the control region 160 integrates two pressure sensor components. When user's finger slides on the control region 160, the first mobile terminal 100 determines a switching direction of the content displayed on the second display component 120 in response to an order of triggering of the two pressure sensor components.

As an optional embodiment of the disclosure, the control region 160 may further integrate a fingerprint recognition module. When user's finger covers the control region 160, fingerprint information is recognized. When the recognized fingerprint information matches preset fingerprint information, the first display component 110 is unlocked to display content. The preset fingerprint information is pre-stored in the first mobile terminal 100, and there may be at least one piece of preset fingerprint information. The first display component 110 can be unlocked to display content when the recognized fingerprint information matches any one of the preset fingerprint information.

Based on the above-described situation, as an optional embodiment of the disclosure, the second control chip 140 may further be configured to control the second display component 120 to display the first content when the first control chip 130 is in a standby state.

As an optional embodiment of the disclosure, as illustrated in FIG. 10, the first mobile terminal 100 further includes the control region 160. If the computing performance of the second control chip 140 is low, the first mobile terminal 100 further includes a third control chip 170, which is configured to control the aforementioned control region 160. The control region 160 is configured to receive input information externally and send the input information to the third control chip 170. The third control chip 170 is connected to the first control chip 130 and the control region 160, and is configured to send the received input information to the first control chip 130. The first control chip 130 determines the operational state of the second display component 120 based on the input information.

Exemplarily, the third control chip 170 may be a control chip for the control region 160, such as an MCU. The third control chip 170 may be integrated in the main body of the first mobile terminal 100.

In embodiments of the disclosure, the third control chip 170 is connected to the first control chip 130 and the control region 160. The control region 160 sends the received input information externally to the third control chip 170, and the third control chip 170 reports the received input information to the first control chip 130, so that the first control chip 130 determines the display content to be displayed on the second display component 120 based on the input information, and then determines the operational state of the second display component 120.

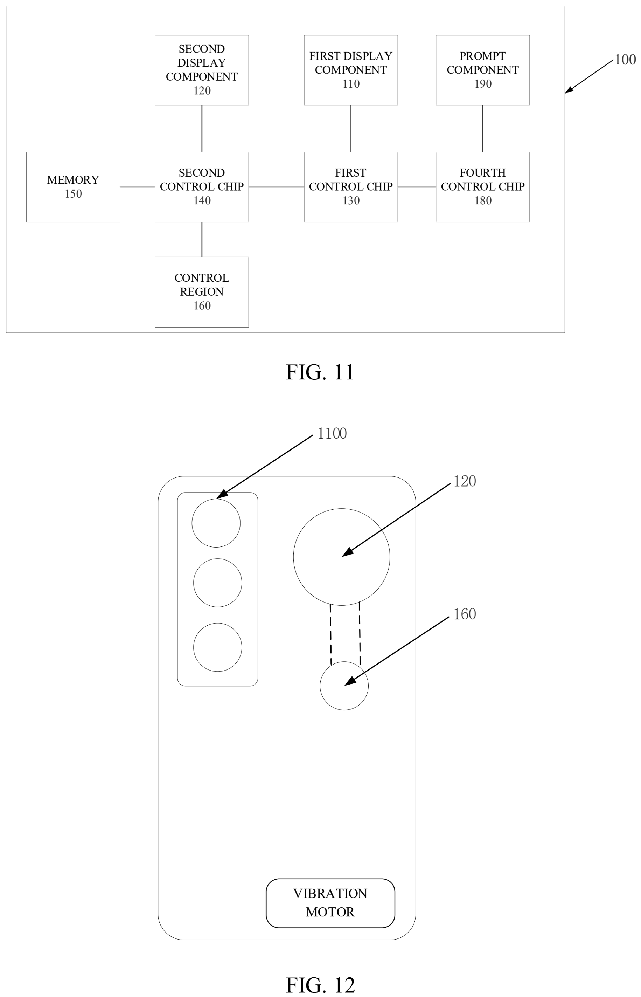

As an optional embodiment of the disclosure, as illustrated in FIG. 11, the first mobile terminal 100 further includes a fourth control chip 180 and a prompt component 190. The control region 160 is further configured to activate the prompt component 190. The fourth control chip 180 is configured to control the prompt component 190 to provide a prompt.

Exemplarily, in embodiments of the disclosure, the prompt component 190 may be at least one of a light strip, a vibration motor, a speaker, etc., capable of providing light, vibration, sound and other prompts. The prompt component 190 is not specifically limited in embodiments of the disclosure.

For example, the prompt component 190 is a vibration motor. As illustrated in FIG. 12, the vibration motor may be disposed at any position on the second surface of the main body of the first mobile terminal 100, such as the lower right corner. Embodiments of the disclosure are not specifically limited in this regard.

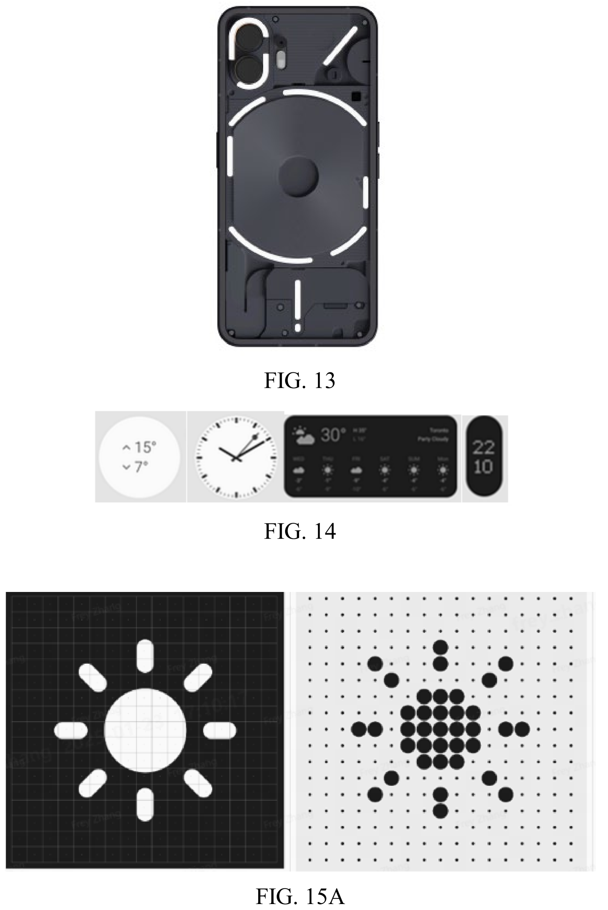

For example, the prompt component 190 is a light strip. As illustrated in FIG. 13, the light strip is disposed on the second surface of the main body of the first mobile terminal 100. As illustrated in FIG. 13, the white strips (including white straight strips and white curved strips) in FIG. 13 are the light strips. At least one light strips may be provided, and the at least one light strips are disposed at any position on the second surface of the main body of the first mobile terminal 100 according to actual needs.

In embodiments of the disclosure, the fourth control chip 180 is a chip for controlling the prompt component 190, such as an MCU. The fourth control chip 180 may be integrated in the main body of the first mobile terminal 100 and is connected to the first control chip 130 and the prompt component 190.

In embodiments of the disclosure, in specific operation, the control region 160 receives input information (referred to herein as an activation signal) externally and sends the activation signal to the second control chip 140. The second control chip 140 reports the activation signal to the first control chip 130. The first control chip 130 sends the activation signal to the fourth control chip 180. The fourth control chip 180 activates the prompt component 190 based on the activation signal. Then the control region 160 receives input information (referred to herein as a control signal) externally and sends the control signal to the second control chip 140. The second control chip 140 reports the control signal to the first control chip 130, and the first control chip 130 sends the control signal to the fourth control chip 180. The fourth control chip 180 controls the prompt component 190 to provide a corresponding prompt based on the control signal. In actual operational scenarios of the first mobile terminal 100, the aforementioned activation signal and the control signal may be the same signal (referred to as a target signal), that is, the fourth control chip 180 activates, based on the received target signal, the prompt component 190 and controls the prompt component 190 to provide the prompt.

As an optional embodiment of the disclosure, the first mobile terminal 100 further includes the prompt component 190. The prompt component 190 is connected to the second control chip 140. The control region 160 is further configured to activate the prompt component 190. Based on this, in specific operation, the control region 160 receives the input information (referred to herein as the activation signal) externally and sends the activation signal to the second control chip 140. The second control chip 140 activates the prompt component 190 based on the activation signal. Then the control region 160 receives input information (referred to herein as the control signal) externally and sends the control signal to the second control chip 140. The second control chip 140 controls the prompt component 190 to provide a corresponding prompt based on the control signal. In actual operational scenarios of the first mobile terminal 100, the aforementioned activation signal and control signal may be the same signal (referred to as the target signal), that is, the second control chip 140 activates, based on the received target signal, the prompt component 190 and controls the prompt component 190 to provide the prompt.

As an optional embodiment of the disclosure, when performing an operation of displaying specified content on the first display component 110, array division is performed on the specified content. Each light-emitting unit is mapped to at least one divided region of the specified content, and a display parameter of the light-emitting unit mapped to each divided region is determined to obtain a dot-matrix form of the specified content. The second display component 120 is controlled to display the specified content based on the dot-matrix form of the specified content.

Exemplarily, in embodiments of the disclosure, the specified content may be the first content or the second content, such as images, time, emojis, etc. Embodiments of the disclosure are not specifically limited in this regard.

In embodiments of the disclosure, before displaying the specified content on the second display component 120, the first control chip 130 needs to divide the specified content and map the divided specified content to the light-emitting units. There are many specific division methods. For example, the specified content may be divided according to the number of light-emitting units. For another example, the specified content may be divided into a preset number (e.g., 3000) of divided regions. The division method of the specified content is not specifically limited in the embodiments of the disclosure.

After the division of the specified content, the divided regions are mapped to the light-emitting units, and each light-emitting unit is mapped to at least one divided region of the specified content. For each divided region, a display parameter of the mapped light-emitting unit is determined. The display parameter may include an on/off state of the light-emitting unit, brightness of the light-emitting unit, a color of the light-emitting unit, etc. The display parameter is not specifically limited in the embodiments of the disclosure.

As a specific example, assuming that the second display component 120 has 100 light-emitting units and the specified content has 10000 pixels, a region enclosed by 100 pixels (10*10) corresponds to one light-emitting unit.

Based on this, when determining the brightness among the display parameter of the light-emitting unit(s), the average brightness of 100 pixels, the median brightness of 100 pixels, or the average brightness of 100 pixels after removing extreme brightness values may be used as the brightness of the light-emitting unit. In embodiments of the disclosure, for example, the average brightness of 100 pixels is taken as the brightness of the corresponding light-emitting unit. If the brightness of 100 pixels are all 100, the brightness of the corresponding light-emitting unit is also 100. If the brightness of 100 pixels are all 1, the brightness of the corresponding light-emitting unit is also 1. If the brightness of 100 pixels are 1 to 100 in sequence, the brightness of the corresponding light-emitting unit is 50.

In embodiments of the disclosure, after determining the brightness of the light-emitting units, whether the mapped specified content meets an expectation is analyzed. For example, whether there is distortion is analyzed. If the distortion exists, secondary adjustment may be performed. There are many specific adjustment methods, such as adjustment by a trained AI model to enhance the display effect.

When determining the color among the display parameter of the light-emitting unit(s), grayscale processing can be performed on the specified content, and all content, such as the clock widget, weather widget, date widget, etc., in FIG. 14, can be characterized by different grayscales.

After determining the display parameter of the light-emitting unit(s) mapped to each divided region, the dot-matrix form of the specified content is obtained, and then the first control chip 130 or the second control chip 140 controls the second display component 120 to display the dot-matrix form of the specified content. In embodiments of the disclosure, the second control chip 140 controls the second display component 120 to display the specified content as follows. The first control chip 130 sends the dot-matrix form of the specified content to the second control chip 140, and the second control chip 140 controls the second display component 120 to display the specified content based on the received dot-matrix form of the specified content.

In embodiments of the disclosure, by displaying the specified content on the first display component 110 and then displaying the specified content on the second display component 120, interaction between the two display components is realized, and interactive operations of the first mobile terminal 100 are enriched.

As an embodiment of the disclosure, the light-emitting unit of the second display component 120 defines a gap(s), and a photovoltaic component is arranged in the gap(s). The photovoltaic component is configured to supply power to at least one of the second control chip 140 or the second display component 120.

Exemplarily, in embodiments of the disclosure, the array-arranged light-emitting units define a gap(s), and a photovoltaic component is arranged in the gap(s). The photovoltaic component may be arranged in the gap(s) or part of the gap(s). The arrangement of the photovoltaic component is not specifically limited in embodiments of the disclosure.

As a specific example, as illustrated in FIG. 3, the gray area in FIG. 3 is the gap(s) between the light-emitting units (black circles), and the photovoltaic component can be arranged in the gray area to supply power to the second display component 120. Specifically, the photovoltaic component may be arranged in all gray area or part of the gray area.

In embodiments of the disclosure, the photovoltaic component may supply power to at least one of the second control chip 140 or the second display component 120. The photovoltaic component may also supply power to the third control chip 170, the fourth control chip 180, the prompt component 190, etc.

In embodiments of the disclosure, by arranging the photovoltaic component in the gap(s) between the light-emitting units to supply power to the second control chip 140, the second display component 120, the third control chip 170, the fourth control chip 180, the prompt component 190, etc., power consumption of the first mobile terminal 100 is reduced, and the second content can still be displayed on the second display component 120 when the first mobile terminal 100 is in a power-off state.

As an optional embodiment of the disclosure, as illustrated in FIG. 12, the first mobile terminal 100 further includes a camera module 1100. The first control chip 130 is further configured to control the camera module 1100 to capture a first preview image, process the captured first preview image into a second preview image, and send the second preview image to the second control chip 140. The second preview image is a dot-matrix form of the first preview image. The second control chip 140 is further configured to control the second display component 120 to display the second preview image.

Exemplarily, in embodiments of the disclosure, the camera module 1100 may be on the second surface of the main body of the first mobile terminal 100, that is, the camera module 1100 is on the same surface of the first mobile terminal 100 as the second display component 120.

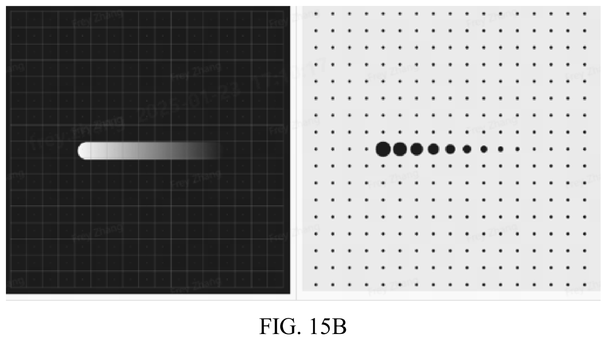

With reference to FIG. 15A and FIG. 15B, the specific process of processing the first preview image into the second preview image is described below.

As illustrated in FIG. 15A, the left image in FIG. 15A is the first preview image, the right image in FIG. 15A is the second preview image, and the second display component 120 illustrated in FIG. 15A is composed of light-emitting units arranged in a 17*17 square array. For the first preview image in FIG. 15A, the first preview image is divided according to the number of light-emitting units of the second display component 120, that is, the first preview image is divided into 17*17 divided regions, and each divided region corresponds to one light-emitting unit. Then the divided regions are mapped to the light-emitting units of the second display component 120. Specifically, for each divided region, if a proportion of a foreground image in the divided region is greater than or equal to a specified proportion (e.g., 50%), the divided region is determined as a foreground divided region. If the proportion of the foreground image in the divided region is less than the specified proportion, the divided region is determined as a background divided region. During mapping, the size of the light-emitting unit mapped to the background divided region remains unchanged, and the light-emitting unit mapped to the foreground divided region is rendered as a larger circle, thus the second preview image on the right of FIG. 15A is obtained. In this way, the first preview image is processed into the second preview image.

As illustrated in FIG. 15B, the left image in FIG. 15B is the first preview image, and the right image in FIG. 15B is the second preview image. The second display component 120 illustrated in FIG. 15B is composed of light-emitting units arranged in a 17*17 square array. For the first preview image in FIG. 15B, the first preview image is divided according to the number of light-emitting units of the second display component 120, that is, the first preview image is divided into 17*17 divided regions, and each divided region corresponds to one light-emitting unit. Then the divided regions are mapped to the light-emitting units of the second display component 120. Specifically, for each divided region, if the proportion of the foreground image in the divided region is greater than or equal to a specified proportion (e.g., 50%), the divided region is determined as a foreground divided region. If the proportion of the foreground image in the divided region is less than the specified proportion, the divided region is determined as a background divided region. During mapping, the size of the light-emitting unit mapped to the background divided region remains unchanged, and the light-emitting unit mapped to the foreground divided region is rendered as a larger circle. In addition, the whiter the color of the foreground divided region, the larger the radius of the mapped circle, thus the second preview image on the right of FIG. 15B is obtained. In this way, the first preview image is processed into the second preview image.

Based on the above description, the rear camera shooting function of the first mobile terminal 100 can be used for self-shooting while the user can see the preview.

In embodiments of the disclosure, by displaying the second preview image on the second display component 120, the first display component 110 may not display in this case, which can reduce the power consumption of the first mobile terminal 100.

As an optional embodiment of the disclosure, if the computing performance of the second control chip 140 is high, when image capture is required, the second control chip 140 is further configured to generate an invoke instruction for invoking the camera module 1100 and control the second display component 120 to display an image captured by the camera module 1100 based on the invoke instruction.

Exemplarily, in embodiments of the disclosure, there are many trigger methods for image capture. For example, the image capture is triggered when the user presses the control region 160. For another example, the image capture is triggered when the user performs an operation for image capture on the first display component 110 (i.e., the user turn on the rear camera self-shooting mode of the first mobile terminal 100), etc. The trigger method for image capture is not specifically limited in embodiments of the disclosure.

In embodiments of the disclosure, for the specific implementation of controlling the second display component 120 to display images captured by the camera module 1100 based on the invoke instruction, reference may be made to above description of the relevant embodiments of processing images into images the dot-matrix form, which is not repeated herein.

As an optional embodiment of the disclosure, the first mobile terminal 100 is connected to a second mobile terminal. The second mobile terminal is connected to the first control chip 130. The first control chip 130 is configured to obtain operational information of the second mobile terminal and send the operational information to the second control chip 140 to control the second display component 120 to display at least part of the operational information. Alternatively, the second mobile terminal is connected to the second control chip 140. The second control chip 140 is further configured to obtain the operational information of the second mobile terminal and control the second display component 120 to display at least part of the operational information.

Exemplarily, in embodiments of the disclosure, the second mobile terminal and the first mobile terminal 100 may be connected via Bluetooth^{®}. The second mobile terminal may specifically be earphones, smart watch, etc. The second mobile terminal is not specifically limited in the embodiments of the disclosure.

When the computing performance of the second control chip 140 is low, the aforementioned second mobile terminal may be connected to the first control chip 130. The first control chip 130 obtains the operational information of the second mobile terminal and sends the operational information of the second mobile terminal to the second control chip 140, and then the second control chip 140 controls the second display component 120 to display the operational information. When the computing performance of the second control chip 140 is high, the aforementioned second mobile terminal may be directly connected to the second control chip 140. The second control chip 140 directly obtains the operational information of the second mobile terminal and then controls, based on the obtained operational information of the second mobile terminal, the second display component 120 to display.

In embodiments of the disclosure, the aforementioned operational information may include at least one of an operational state of the second mobile terminal, operational content displayed on the second mobile terminal, or an operational interface of the second mobile terminal. The operational state of the second mobile terminal may be, for example, the playback state of earphones. The operational content displayed on the second mobile terminal may include, for example, the power of earphones, the power of a smart watch, etc. The operational interface of the second mobile terminal may be, for example, the interface displayed by a smart watch.

In embodiments of the disclosure, when the second mobile terminal is directly connected to the second control chip 140, the second control chip 140 may also be configured to control the operational state of the second mobile terminal, such as controlling the pause, play, etc., of earphones.

In embodiments of the disclosure, after obtaining the operational information of the second mobile terminal, the obtained operational information may be directly displayed on the second display component 120, or may be adjusted before displayed on the second display component 120. Embodiments of the disclosure are not specifically limited in this regard. As a specific example, if the obtained operational information is the date: January 23, 2025, the content displayed on the second display component 120 may be changed to "January 23", or "Jan 23rd", or corresponding to lunar solar terms (e.g., Little New Year, Major Cold), etc.

As an optional embodiment of the disclosure, the first mobile terminal 100 further includes a widget. The first control chip 130 is further configured to process initial content displayed on the widget into target content and send the target content to the second control chip 140. The target content is a dot-matrix form of the initial content. The second control chip 140 is further configured to control the second display component 120 to display the target content.

Exemplarily, in embodiments of the disclosure, the widget is a lightweight application or component that usually has a single function and can be independently deployed and run. The widget may be, for example, a temperature widget, a clock widget, a date widget, and a weather widget illustrated in FIG. 14, etc.

In embodiments of the disclosure, for the specific method of processing the initial content displayed on the widget into the target content, reference may be made to the relevant description of processing the specified content above, which is not repeated herein.

Based on the above description of the first mobile terminal 100, an interaction method executed by the first mobile terminal 100 is described below.

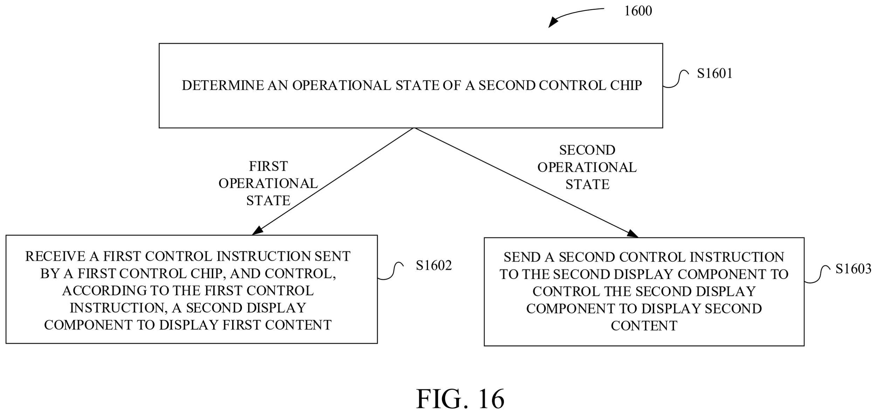

FIG. 16 is an exemplary flowchart of an interaction method 1600 in the embodiments of the disclosure. As illustrated in FIG. 16, the interaction method 1600 includes the following. S1601, an operational state of a second control chip is determined. S1602, upon determining that the second control chip is in a first operational state, a first control instruction sent by a first control chip is received, and a second display component is controlled, according to the first control instruction, to display first content. S1603, upon determining that the second control chip is in a second operational state, a second control instruction is sent to the second display component to control the second display component to display second content.

For the specific implementations, reference may be made to the description of the embodiments of the first mobile terminal 100, which is not repeated herein.

While multiple embodiments of the disclosure have been illustrated and described herein, it will be obvious to those skilled in the art that such embodiments are provided by way of example. Multiple modifications, changes, and alternatives may occur to those skilled in the art without departing from the spirit and scope of the disclosure. It should be understood that various alternatives to the embodiments of the disclosure described herein may be employed in practicing the disclosure. The claims are intended to define the scope of the disclosure and thus cover such equivalents or alternatives within the scope of the claims.

## Claims

1. A mobile terminal, being a first mobile terminal and comprising a first display component, a second display component, a first control chip, and a second control chip, wherein
the second control chip is connected to the first control chip and the second display component; and
the second control chip is configured to:
in a first operational state, receive a first control instruction from the first control chip and control, according to the first control instruction, the second display component to display first content; and
in a second operational state, generate a second control instruction and send the second control instruction to the second display component to control the second display component to display second content.

2. The mobile terminal of claim 1, wherein
the first mobile terminal further comprises a memory connected to the second control chip; if display content to be displayed on the second display component is the second content, the display content is provided by content stored in the memory; and
if the display content is the first content, the display content is provided by content transmitted by the first control chip, or the display content is provided jointly by content transmitted by the first control chip and content stored in the memory.

3. The mobile terminal of claim 1 or claim 2, wherein the first mobile terminal further comprises a control region connected to the second control chip, wherein the control region is configured to receive input information externally and send the input information to the second control chip to switch content displayed on the second display component.

4. The mobile terminal of claim 3, wherein the second control chip is further configured to control, when the first control chip is in a standby state, the second display component to display the first content.

5. The mobile terminal of claim 1 or claim 2, wherein the first mobile terminal further comprises a control region and a third control chip, wherein
the control region is configured to receive input information externally and send the input information to the third control chip;
the third control chip is connected to the first control chip and the control region, and is configured to send the input information received to the first control chip; and
the first control chip is configured to determine an operational state of the second display component based on the input information.

6. The mobile terminal of claim 3, wherein the first mobile terminal further comprises a fourth control chip and a prompt component, wherein
the control region is further configured to activate the prompt component; and
the fourth control chip is configured to control the prompt component to provide a prompt.

7. The mobile terminal of claim 5, wherein the first mobile terminal further comprises a fourth control chip and a prompt component, wherein
the control region is further configured to activate the prompt component; and
the fourth control chip is configured to control the prompt component to provide a prompt.

8. The mobile terminal of any preceding claim, wherein
the second display component is an array of light-emitting units;
when performing an operation of displaying specified content on the first display component, an array division is performed on the specified content to generate a plurality of divided regions of the specified content, wherein each light-emitting unit of the array of light emitting units is mapped to at least one divided region of the specified content, and a display parameter is determined for each of the light-emitting units to obtain a dot-matrix form of the specified content; and
the second display component is controlled to display the specified content based on the dot-matrix form of the specified content.

9. The mobile terminal of claim 8, wherein the array of light-emitting units define at least one gap, a photovoltaic component is arranged in the at least one gap, and the photovoltaic component is configured to supply power to at least one of the second control chip or the second display component.

10. The mobile terminal of claim 8 or 9, wherein
the first mobile terminal further comprises a camera module;
the first control chip is further configured to control the camera module to capture a first preview image, process the first preview image into a second preview image, and send the second preview image to the second control chip, wherein the second preview image is a dot-matrix form of the first preview image; and
the second control chip is further configured to control the second display component to display the second preview image.

11. The mobile terminal of any of claims 1-9, wherein
the first mobile terminal further comprises a camera module; and
when image capture is required, the second control chip is further configured to generate an invoke instruction for invoking the camera module, and control the second display component to display an image captured by the camera module based on the invoke instruction.

12. The mobile terminal of any preceding claim, wherein the first mobile terminal is connected to a second mobile terminal, wherein
the second mobile terminal is connected to the first control chip, and the first control chip is configured to obtain operational information of the second mobile terminal and send the operational information to the second control chip to control the second display component to display at least part of the operational information, wherein the operational information comprises at least one of an operational state of the second mobile terminal, operational content displayed on the second mobile terminal, or an operational interface of the second mobile terminal; or
the second mobile terminal is connected to the second control chip, and the second control chip is further configured to obtain the operational information of the second mobile terminal and control the second display component to display at least part of the operational information.

13. The mobile terminal of claim 12, wherein when the second mobile terminal is connected to the second control chip, the second control chip is further configured to control the operational state of the second mobile terminal.

14. The mobile terminal of claim 1, wherein
the first mobile terminal further comprises a widget;
the first control chip is further configured to process initial content displayed on the widget into target content and send the target content to the second control chip, wherein the target content is a dot-matrix form of the initial content; and
the second control chip is further configured to control the second display component to display the target content.

15. A method performed by a mobile terminal, wherein the mobile terminal comprises a first display component, a second display component, a first control chip, and a second control chip, the method comprising:
determining an operational state of the second control chip;
receiving a first control instruction sent by the first control chip and controlling, according to the first control instruction, the second display component to display first content, upon determining that the second control chip is in a first operational state; and
sending a second control instruction to the second display component to control the second display component to display second content, upon determining that the second control chip is in a second operational state.
